# EUROPÄISCHE PATENTSCHRIFT

(11) **EP 2 890 938 B1**
(45) Veröffentlichungstag und Bekanntmachung des Hinweises auf die Patenterteilung: **22.08.2018**
(21) Anmeldenummer: 13753334.5
(22) Anmeldetag: 29.08.2013
(51) Int. Cl.: F24S 10/00, F24S 10/75, F24S 10/50, F24S 70/65, F24S 80/54, F24S 20/66, F24S 10/40, F24S 10/60, F24S 10/70, F24S 20/63, E04B 1/76

(54) **GEBÄUDEMODUL UND VERFAHREN ZUM HERSTELLEN EINES GEBÄUDEMODULS**
BUILDING MODULE AND METHOD FOR PRODUCING OF A BUILDING MODULE
MODULE DE BÂTIMENT ET PROCÉDÉ DE FABRICATION D'UN MODULE DE BÂTIMENT

(30) Priorität: 31.08.2012 DE 102012017211
(43) Veröffentlichungstag der Anmeldung: 08.07.2015
(73) Patentinhaber: Reutter, Odilo, 70178 Stuttgart (DE)
(72) Erfinder: REUTTER, Odilo, 70184 Stuttgart (DE)
(74) Vertreter: Witte, Weller & Partner Patentanwälte mbB
(86) Internationale Anmeldenummer: PCT/EP2013/067916
(87) Internationale Veröffentlichungsnummer: WO 2014/033219

(56) Entgegenhaltungen:
- EP-A2- 0 249 919
- EP-A2- 2 587 182
- WO-A2-2011/048595
- WO-A2-2011/057316
- DE-A1-102006 000 668
- DE-B4-102008 047 327
- FR-A1- 2 942 029
- US-B2- 8 230 649

## Beschreibung

Die vorliegende Erfindung betrifft ein Gebäudemodul, insbesondere ein Fassadenmodul, Dachmodul oder Fenstermodul, zur Nutzung von Sonnenenergie und/oder zur thermischen Isolierung, mit einer Innenscheibe und einer Außenscheibe, wobei zwischen der Innenscheibe und der Außenscheibe ein Zwischenraum gebildet ist, einem Wärmeübertragungselement, insbesondere einem Absorberelement, das in dem Zwischenraum angeordnet ist und wenigstens eine Funktionsfläche zum Absorbieren von Wärmestrahlung und/oder zum Temperieren des Zwischenraums aufweist, und einer Fluidleitung, in der ein Wärmetransportmedium geführt ist, wobei zwischen dem Wärmeübertragungselement und dem Wärmetransportmedium ein thermischer Kontakt gebildet ist, um Wärme zwischen dem Wärmeübertragungselement und dem Wärmetransportmedium auszutauschen, wobei das Wärmeübertragungselement als Vollkörper ausgebildet ist und einen Wärmeleiter zur thermischen Verbindung zwischen der Funktionsfläche und dem thermischen Kontakt bildet, wobei die Funktionsfläche und die Fluidleitung, der der thermische Kontakt zugeordnet ist, in senkrechter Blickrichtung auf die Funktionsfläche nebeneinander angeordnet sind.

Die vorliegende Erfindung betrifft ferner ein Verfahren zum Herstellen eines Gebäudemoduls, insbesondere eines Fassadenmoduls, Dachmoduls oder Fenstermoduls, zur Nutzung von Sonnenenergie und/oder zur thermischen Isolierung, mit den Schritten: Bereitstellung einer Fluidleitung, in der ein Wärmetransportmittel führbar ist, Bereitstellen eines Wärmeübertragungselements, insbesondere eines Absorberelements, das wenigstens eine Funktionsfläche zum Absorbieren von Wärmestrahlung und/oder zum Temperieren von Umgebungsluft aufweist, wobei das Wärmeübertragungselement als Vollkörper ausgebildet ist, Bilden eines thermischen Kontaktes zwischen dem Wärmeübertragungselement und der Fluidleitung derart, dass die Funktionsfläche und die Fluidleitung in senkrechter Blickrichtung auf die Funktionsfläche nebeneinander angeordnet sind, wobei das Wärmeübertragungselement einen Wärmeleiter zwischen der Funktionsfläche und dem thermischen Kontakt bildet, und Verbinden einer Innenscheibe und einer Außenscheibe mit der Fluidleitung, so dass zwischen der Innenscheibe und der Außenscheibe ein Zwischenraum gebildet wird, in dem das Wärmeübertragungselement angeordnet ist.

Die vorliegende Erfindung betrifft schließlich eine Wärmeverteilungsanordnung für ein Gebäude mit einer Mehrzahl von Gebäudemodulen gemäß der vorliegenden Erfindung und einem Fluidsystem, das zum Austausch von Wärme zwischen den Gebäudemodulen die Fluidleitungen der Gebäudemodule wenigstens thermisch miteinander verbindet.

Derartige Gebäudemodule sind üblicherweise an Gebäuden befestigt und dienen dazu, Sonnenstrahlen in thermische Energie und/oder elektrische Energie zu wandeln und die so gewonnene thermische und/oder elektrische Energie im Gebäude zu nutzen und/oder das Gebäude thermisch zu isolieren.

Aus dem Stand der Technik ist es allgemein bekannt, Sonnenkollektoren in Fenstern oder in Fassadenelementen anzuordnen, um die einfallende Sonnenstrahlung in thermische Energie zu wandeln. Dabei sind die Sonnenkollektoren üblicherweise als langgestreckte Lamellen ausgebildet, in denen eine Fluidleitung ausgebildet ist, die von einer Wärmetransportflüssigkeit durchflossen wird, um die Wärme, die von den Sonnenstrahlen in den Sonnenkollektoren erzeugt wird, abzutransportieren und zur Erwärmung beispielsweise eines Gebäudeinnenraums nutzbar zu machen. Ein derartiger Fenster-Sonnenkollektor ist beispielsweise bekannt aus der DE 102 51 921 B4.

Alternativ kann ein Gebäudeinnenraum auch mittels Sonnenkollektorlamellen erwärmt werden, wie es aus der DE 28 30 745 bekannt ist. Dabei weisen die Lamellen keine Fluidleitung auf, um den Gebäudeinnenraum über ein Wärmetransportmedium zu erwärmen, sondern werden lediglich von der Raumluft des Gebäudeinnenraums umströmt, um die in den Lamellen durch die Sonneneinstrahlung entstandene Wärme abzutransportieren. Dabei sind die Sonnenkollektorlamellen zwischen zwei Glasscheiben angeordnet, wobei am unteren Ende der Glasscheiben und am oberen Ende der Glasscheiben jeweils Lüftungsöffnungen ausgebildet sind, um kalte Luft zwischen die Glasscheiben einströmen zu lassen und warme Luft am oberen Ende ausströmen zu lassen.

Schließlich ist es aus der DE 10 2008 047 327 B4 bekannt, Sonnenkollektorlamellen mit einem Fluidsystem zum Erwärmen eines Wärmetransportmediums, mit einer photovoltaischen Einheit zum Erzeugen von elektrischer Energie und mit einer weiteren Funktionsfläche auszubilden, um beispielsweise Sonnenstrahlen in den Innenraum eines Gebäudes zu reflektieren.

Nachteilig bei den aus dem Stand der Technik bekannten Sonnenkollektoren ist es, dass die Kollektorlamellen technisch aufwendig sind und durch den großen Durchmesser bedingt durch das Fluidleitungssystem eine geringe Durchsicht durch ein mit diesen Sonnenkollektoren ausgerüstetes Fenster bieten und gleichzeitig die Dicke des gesamten Fenstermoduls stark erhöhen. Ferner ist es nachteilig, dass zur Isolierung des jeweiligen Gebäudeinnenraums eine zusätzliche Isolierscheibe vorgesehen werden muss oder der Zwischenraum, in dem die Kollektorlamellen angeordnet sind, mit technisch hohem Aufwand evakuiert werden muss, um einen Wärmedurchgang durch die Scheibe zu reduzieren, und der Wärmedurchgang nicht individuell eingestellt werden kann.

Aus der WO 2011/057316 A2 ist ein Sonnenkollektormodul mit einem Absorberelement und einem Wärmeleitelement bekannt, bei dem eine Schnittstelle an einer Unterkonstruktion zugewandten Rückseite des Solarkollektormoduls zur Übertragung von Wärmeenergie zwischen dem Solarkollektormodul und einem an der Unterkonstruktion angeordneten Wärmetransportsystem gebildet ist.

Aus der DE 10 2006 000 668 A1 ist ein Sonnenkollektor bekannt, mit einem Absorberrohr, das ein Kühlfluid aufweist und einem Wärmeträgerrohr in dem ein Wärmetransportmedium geführt ist, wobei das Absorberrohr und das Wärmeträgerrohr thermisch mittels eines Wärmeübergangs miteinander verbunden sind.

Es ist daher die Aufgabe der vorliegenden Erfindung, ein verbessertes Gebäudemodul zur Nutzung von Sonnenenergie bereitzustellen, das technisch weniger aufwendig ist und Wärmedurchgangselemente mit geringer Baugröße aufweist. Ferner ist es die Aufgabe der Erfindung, ein Gebäudemodul bereitzustellen, mit dem mit geringem technischem Aufwand der Wärmedurchgang durch das Gebäudemodul eingestellt werden kann.

Es ist ferner die Aufgabe der vorliegenden Erfindung, ein Verfahren zum Herstellen eines derartigen Gebäudemoduls bereitzustellen.

Diese Aufgabe wird bei dem eingangs genannten Gebäudemodul dadurch gelöst, dass das Wärmeübertragungselement als Vollkörper ausgebildet ist und einen Wärmeleiter zur thermischen Verbindung zwischen der Funktionsfläche und dem thermischen Kontakt bildet, und die Funktionsfläche und die Fluidleitung, der der thermische Kontakt zugeordnet ist, in senkrechter Blickrichtung auf die Funktionsfläche nebeneinander angeordnet sind und somit keine Überdeckung aufweisen.

Diese Aufgabe wird schließlich bei dem eingangs genannten Verfahren dadurch gelöst, dass ein thermischer Kontakt zwischen dem Wärmeübertragungselement und der Fluidleitung derart gebildet wird, dass die Funktionsfläche und die Fluidleitung in senkrechter Blickrichtung auf die Funktionsfläche nebeneinander angeordnet sind. Erfindungsgemäß wird unter nebeneinander angeordnet verstanden, dass die Fluidleitung und die Funktionsfläche unmittelbar aneinander anliegen können oder voneinander beabstandet angeordnet sein können.

Dadurch, dass die Funktionsfläche des Wärmeübertragungselements und die Fluidleitung der der thermische Kontakt zugeordnet ist, nebeneinander angeordnet sind, wird die Wärme mittels Wärmeleitung zwischen der Funktionsfläche und dem thermischen Kontakt in seitlicher Richtung ausgetauscht, wodurch das Wärmeübertragungselement ohne integrierte Fluidleitung mit besonders geringem Durchmesser ausgebildet werden, mit geringem technischem Aufwand beispielsweise als metallisches langgestrecktes Element oder metallische Platte gefertigt werden und mit geringem technischem Aufwand gelagert werden kann. Dadurch kann insgesamt der technische Aufwand des Gebäudemoduls reduziert und der Bauraum, der für das Wärmeübertragungselement notwendig ist, reduziert werden.

Die Aufgabe der vorliegenden Erfindung wird somit vollständig gelöst

Es ist weiterhin bevorzugt, wenn der Zwischenraum gasdicht ausgebildet ist und mit einem gasförmigen Medium gefüllt ist, so dass Wärme zwischen dem Wärmetransportmedium und dem gasförmigen Medium austauschbar ist.

Dadurch kann Wärme zwischen dem Wärmetransportmedium und dem Wärmeübertragungselement und zwischen der Funktionsfläche und dem gasförmigen Medium ausgetauscht werden, so dass das gasförmige Medium erwärmt oder gekühlt und die Temperatur des gasförmigen Mediums an eine Innenraumtemperatur angepasst bzw. eingestellt werden kann, wodurch ein Wärmestrom in der Innenscheibe reguliert werden kann. Dadurch kann insbesondere die Isolationswirkung des Gebäudemoduls mit technisch geringem Aufwand verbessert werden.

Es ist weiterhin bevorzugt, wenn das Wärmeübertragungselement als langgestrecktes Element ausgebildet ist, wobei der thermische Kontakt und die Funktionsfläche in axialer Richtung des Wärmeübertragungselements versetzt zueinander ausgebildet sind.

Dadurch kann in der Ausführungsform als Fenstermodul die Durchsicht durch das Fenstermodul hindurch verbessert werden, da die langgestreckten Elemente nicht die gesamte Modulfläche bedecken.

Es ist weiterhin bevorzugt, wenn der thermische Kontakt an einem Endabschnitt des Wärmeübertragungselements gebildet ist. Dabei ist es besonders bevorzugt, wenn der thermische Kontakt lediglich an dem einen Endabschnitt des Wärmeübertragungselementes gebildet ist.

Dadurch kann das Wärmeübertragungselement an der Fluidleitung mechanisch gelagert werden und gleichzeitig den thermischen Kontakt als Wärmeübergang bilden.

Es ist weiterhin bevorzugt, wenn der thermische Kontakt an einer Stirnfläche des Wärmeübertragungselements gebildet ist.

Dadurch kann der thermische Kontakt zwischen dem Wärmeübertragungselement und der Fluidleitung mit einfachen Mitteln gebildet werden, da das Wärmeübertragungselement lediglich mit seiner Stirnfläche an der Fluidleitung befestigt werden muss.

In einer bevorzugten Ausführungsform weist das Wärmeübertragungselement einen freien Endabschnitt auf, an dem wenigstens ein Teil der Funktionsfläche gebildet ist.

Dadurch kann eine Durchsicht durch das Gebäudemodul verbessert werden, da das Wärmeübertragungselement sich nicht über die gesamte Breite des Gebäudemoduls erstreckt.

Es ist alternativ bevorzugt, wenn das Wärmeübertragungselement an zwei gegenüberliegenden Endabschnitten jeweils einen thermischen Kontakt aufweist, die jeweils einer Fluidleitung zugeordnet sind. Dabei ist es besonders bevorzugt, wenn der thermische Kontakt lediglich an den zwei Endabschnitten des Wärmeübertragungselementes gebildet ist.

Dadurch kann der Transport der thermischen Energie in dem Wärmeübertragungselement verbessert werden, da zwei thermische Kontakte einen verbesserten Wärmeaustausch bieten und in dem Wärmeübertragungselement zwei thermische Gradienten entstehen.

Es ist weiterhin bevorzugt, wenn das Wärmeübertragungselement durch die Fluidleitung hindurchgeführt ist und an beiden Seiten der Fluidleitung jeweils eine Funktionsfläche aufweist.

Dadurch kann der technische Aufwand zur Herstellung der Wärmeübertragungselemente reduziert werden, da lediglich ein Wärmeübertragungselement gefertigt werden muss, das an beiden Seiten der Fluidleitung aus der Fluidleitung herausragt.

Es ist weiterhin bevorzugt, wenn eine Mehrzahl von Wärmeübertragungselementen in dem Zwischenraum angeordnet sind, die miteinander kontaktiert sind, wobei Längsachsen der Wärmeübertragungselemente schräg zueinander angeordnet sind. Mit anderen Worten bilden die Wärmeübertragungselemente eine Art Gitternetz bzw. ein Geflecht, um die Sonnenstrahlung zu absorbieren und an das Wärmetransportmedium abzugeben.

Dadurch kann der Wärmeaustausch durch die Funktionsfläche verbessert werden, da die einzelnen Wärmetransportelemente miteinander kontaktiert sind und die Funktionsflächen vergrößert und gleichmäßiger in den Gebäudemodul verteilt sind.

Es ist weiterhin bevorzugt, wenn der thermische Kontakt in die Fluidleitung hineinragt und einen konvektiven Wärmeübergang zu dem Wärmetransport bildet.

Es ist weiterhin bevorzugt, wenn das Wärmeübertragungselement an wenigstens einem axialen Endabschnitt mit der Fluidleitung lösbar verbindbar ist.

Dadurch kann der Transportaufwand für das Gebäudemodul erheblich reduziert werden, da die Wärmeübertragungselemente in einem demontierten Zustand transportiert werden können.

Es ist weiterhin bevorzugt, wenn die Fluidleitung wenigstens eine in einer Längsrichtung der Fluidleitung verlaufende Führungsleiste aufweist, in die der wenigstens eine axiale Endabschnitt des Wärmeübertragungselements einführbar ist.

Dadurch kann das Wärmeübertragungselement mit geringem Montageaufwand an der Fluidleitung fixiert werden.

Es ist weiterhin bevorzugt, wenn der axiale Endabschnitt in der Längsrichtung der Fluidleitung beweglich gelagert ist.

Dadurch kann mit geringem Montageaufwand eine präzise Einbauposition des Wärmeübertragungselements vor Ort eingestellt werden.

Es ist weiterhin bevorzugt, wenn der wenigstens eine axiale Endabschnitt über eine Einführöffnung an einem axialen Endabschnitt der Führungsleiste einführbar ist.

Dadurch kann das Wärmeübertragungselement einfach an dem axialen Endabschnitt der Führungsleiste eingesteckt werden und in der Längsrichtung der Führungsleiste in eine Endposition bewegt werden, wodurch der Montageaufwand weiter reduziert wird. Dadurch können ferner mehrere Wärmeübertragungselemente auf die gleiche Weise in die Führungsschiene eingeführt werden, wodurch der Montageaufwand der Wärmeübertragungselemente weiter reduziert wird.

Es ist weiterhin bevorzugt, wenn eine Mehrzahl von Wärmeübertragungselementen in der Führungsleiste gelagert sind und mittels Abstandselementen, die in der Führungsleiste gelagert sind, beabstandet sind.

Dadurch wird der Montageaufwand und der technische Aufwand zur exakten Positionierung der Wärmeübertragungselemente in der Führungsschiene weiter reduziert, da lediglich abwechselnd die Wärmeübertragungselemente und die Abstandselemente in die Führungsleiste von dem axialen Endabschnitt aus eingesteckt werden müssen.

Dadurch kann der Wärmeübergang zwischen dem Absorberelement und dem Wärmetransportmedium verbessert werden, da eine von dem Wärmetransportmedium umströmte Fläche des thermischen Kontakts erhöht ist.

Es ist weiterhin bevorzugt, wenn die Innenscheibe und die Außenscheibe mittels eines Verbindungselements miteinander verbunden sind, das einen Rahmen des Gebäudemoduls bildet, wobei die Fluidleitung wenigstens an einer Seite des Sonnenenergiemoduls in dem Rahmen integriert ist.

Dadurch kann eine besonders kompakte Bauform des Gebäudemoduls erzielt werden, wobei die Fluidleitung von außen nicht sichtbar in dem Rahmen integriert ist.

Es ist weiterhin bevorzugt, wenn die Außenscheibe aus einem für sichtbares Licht transparenten Material gebildet sind und die Oberfläche der Innenscheibe, die dem Zwischenraum zugewandt ist, eine Infrarotreflexionsschicht aufweist, um einstrahlende Infrarotstrahlen in den Zwischenraum zu reflektieren.

Dadurch kann der Wirkungsgrad der Infrarotabsorption erhöht werden, da Infrarotstrahlung, die beim Einstrahlen der Sonnenstrahlen nicht von der Funktionsfläche absorbiert wird bzw. nicht auf die Funktionsfläche treffen, von der Infrarotreflexionsschicht reflektiert wird und beispielsweise von einer Rückseite der Wärmeübertragungselemente absorbiert werden können. Dadurch kann ein Wirkungsgradsteigernder Wärmestau in dem Zwischenraum gebildet werden.

In einer bevorzugten Ausführungsform ist eine Infrarotreflexionsschicht an einer Oberfläche der Außenscheibe, die dem Zwischenraum zugewandt ist, angeordnet, um Infrarotstrahlen in den Zwischenraum zu reflektieren.

Dadurch können Infrarotstrahlen, die aus dem Zwischenraum oder von der Oberfläche der Innenscheibe reflektiert werden, in den Zwischenraum zurückreflektiert werden, wodurch der Wirkungsgrad der Infrarotabsorption erhöht werden kann.

Es ist weiterhin bevorzugt, wenn der Fluidleitung ein Wärmespeicher zugeordnet ist, um Wärme von dem Wärmetransportmedium aufzunehmen und zu speichern und gespeicherte Wärme an das Wärmetransportmedium abzugeben. Alternativ oder in Kombination mit dem Wärmespeicher kann auch eine Wärmepumpe vorgesehen sein, um die Wärmeenergie zu nutzen und beispielsweise in elektrische Energie zu wandeln.

Dadurch kann Wärmeenergie während der Sonneneinstrahlung gespeichert werden und zu einem späteren Zeitpunkt, wenn witterungsbedingt oder tageszeitbedingt die Sonneneinstrahlung reduziert ist, die Wärme in das Wärmetransportmedium zurückgeführt wird, um die Wärmeenergie bedarfsorientiert zu nutzen.

Es ist weiterhin bevorzugt, wenn die Fluidleitung mit einer Wärmepumpe verbunden ist, um Wärme von dem Wärmetransportmedium abzuführen und/oder Wärme dem Transportmedium zuzuführen.

Dadurch können auch geringe Wärmemengen vom Wärmetransportmedium abgeführt oder das Wärmetransportmedium durch geringe Wärmemengen erwärmt werden.

Es ist weiterhin bevorzugt, wenn eine Querschnittsfläche des Wärmeübertragungselementes einen geringeren Durchmesser aufweist als eine Querschnittsfläche der Fluidleitung.

Es ist weiterhin bevorzugt, wenn das Wärmeübertragungselement einen langgestreckten Modulkörper mit einem polygonalen Querschnitt aufweist, an dem eine Mehrzahl von Funktionsflächen ausgebildet sind.

Dadurch können beispielsweise unterschiedliche Funktionsflächen bedarfsorientiert für unterschiedliche Funktionen genutzt werden. Insbesondere können dabei die unterschiedlichen Funktionsflächen bedarfsorientiert ausgerichtet werden, um die einstrahlenden Sonnenstrahlen unterschiedlich zu nutzen.

Es ist dabei besonders bevorzugt, wenn an wenigstens einer der Funktionsflächen eine photovoltaische Einheit angeordnet ist.

Dadurch können die einstrahlenden Sonnenstrahlen in elektrische Energie umgewandelt werden und somit der Wirkungsgrad des Gebäudemoduls gesteigert werden.

Es ist dabei weiterhin bevorzugt, wenn wenigstens eine der Funktionsflächen eine reflektierende Oberfläche aufweist.

Dadurch können die einstrahlenden Sonnenstrahlen in einen Innenraum eines Gebäudes umgelenkt oder von dem Sonnenenergiemodul nach außen reflektiert werden, um entweder den Innenraum des Gebäudes entsprechend zu beleuchten oder die Sonneneinstrahlung zu reduzieren.

Unter dem begriff Vollkörper ist zu verstehen, dass in dem Wärmeübertragungselement keine Hohlräume ausgebildet sind.

Dadurch kann die Wärmeübertragung durch Wärmeleitung innerhalb des Wärmeübertragungselements verbessert werden und somit der Austausch von Wärme zwischen der Funktionsfläche und dem Wärmetransportmedium erhöht werden.

Bei dem erfindungsgemäßen Verfahren ist es besonders bevorzugt, wenn ein axiales Ende des Wärmeübertragungselements mit einer Führungsschiene der Führungsleiste verbunden wird.

Dadurch kann der Montageaufwand und der Aufwand zur Positionierung der Wärmeübertragungselemente reduziert werden.

Es ist weiterhin bevorzugt, wenn das axiale Ende des Wärmeübertragungselements an einem axialen Ende der Führungsleiste in die Führungsleiste eingeführt wird.

Dadurch kann das Wärmeübertragungselement durch einfaches Einstecken an den axialen Endabschnitt der Führungsleiste montiert werden, ohne dass weitere Halterungsmechanismen vorgesehen werden müssen.

Es ist weiterhin bevorzugt, wenn eine Mehrzahl von Wärmeübertragungselementen und eine Mehrzahl von Abstandselementen abwechselnd in die Führungsleiste eingeführt werden, um die Wärmeübertragungselemente in einem eingebauten Zustand zu beabstanden.

Dadurch kann der Montageaufwand und der Positionierungsaufwand der Wärmeübertragungselemente weiter reduziert werden, da lediglich die Wärmeübertragungselemente und die Abstandselemente abwechselnd in die Einführöffnung der Führungsleiste eingesteckt werden müssen.

Durch die vorliegende Erfindung kann insgesamt ein Gebäudemodul mit einem Wärmeübertragungselement, das zwischen der Innenscheibe und der Außenscheibe angeordnet ist, in kompakter Bauform bereitgestellt werden, wodurch insgesamt der Herstellungsaufwand reduziert ist und gleichzeitig die Durchsicht durch das Gebäudemodul verbessert ist. Dies wird erfindungsgemäß dadurch erreicht, dass das Wärmeübertragungselement lediglich Wärme zwischen der Funktionsfläche und dem an einem Endabschnitt des Wärmeübertragungselements angeordneten thermischen Kontakt mittels Wärmeleitung austauscht und somit das Wärmeübertragungselement lediglich aus einem stabilen und thermisch leitfähigen Material gebildet werden muss. Die Fluidleitung, in der das Wärmetransportmedium geführt ist, ist dabei separat von der Funktionsfläche ausgebildet und lediglich über den thermischen Kontakt an dem Endabschnitt oder an zwei gegenüberliegenden axialen Endabschnitten des Wärmeübertragungselements verbunden. Dadurch kann auf eine aufwendige Fluidleitung in dem Wärmeübertragungselement verzichtet werden, wodurch das Wärmeübertragungselement technisch weniger aufwendig ist und gleichzeitig in kompakter Bauform gefertigt werden kann. In einer alternativen oder in einer besonderen Ausführungsform sind der thermische Kontakt und die Funktionsfläche in einer senkrechten Blickrichtung auf die Funktionsfläche nebeneinander angeordnet. Mit anderen Worten weisen der thermische Kontakt und die Funktionsfläche keine Überdeckung in senkrechter Blickrichtung auf die Funktionsfläche auf.

Ferner kann gemäß dem zweiten Aspekt der vorliegenden Erfindung ein Wärmestrom durch das Sonnenenergiemodul hindurch reduziert werden, wenn Wärme von dem Wärmetransportmedium auf die Funktionsfläche und von der Funktionsfläche auf das gasförmige Medium übertragen wird, um eine Temperatur des gasförmigen Mediums in dem Zwischenraum einzustellen. Dadurch kann der Wärmestrom durch die Innenscheibe hindurch reguliert werden, wodurch insbesondere die Isolationswirkung des gesamten Gebäudemoduls verbessert werden kann.

Es versteht sich, dass die Merkmale und Eigenschaften des erfindungsgemäßen Gebäudemoduls auch entsprechend auf das erfindungsgemäße Verfahren zur Herstellung des Gebäudemoduls zutreffen bzw. anwendbar sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Teilansicht eines Gebäudemoduls zur Nutzung von Sonnenenergie;
- Fig. 2: eine schematische Seitenschnittansicht des Gebäudemoduls aus Fig. 1;
- Fig. 3: eine schematische Seitenschnittansicht eines Gebäudemoduls zur Regulierung des Wärmestroms;
- Fig. 4: eine schematische Ansicht des Gebäudemoduls und eines zugeordneten Fluidsystems zur Erläuterung der Funktionsweise des Gebäudemoduls;
- Fig. 5a: eine schematische Ansicht einer Ausführungsform der Wärmeübertragungselemente mit einem freien axialen Ende;
- Fig. 5b: eine schematische Ansicht einer Ausführungsform der Wärmeübertragungselemente mit zweiseitigem thermischem Kontakt;
- Fig. 6: eine schematische Teilansicht des Gebäudemoduls zur Erläuterung einer Ausführungsform des thermischen Kontakts zwischen Wärmeübertragungselement und Wärmetransportmedium;
- Fig. 7: eine schematische Teilansicht zur Erläuterung einer alternativen Ausführungsform des thermischen Kontakts zwischen den Wärmeübertragungselementen und dem Wärmetransportmedium;
- Fig. 8a: eine schematische Teilansicht des Gebäudemoduls mit Wärmeübertragungselementen, die ein freies axiales Ende aufweisen;
- Fig. 8b: eine schematische Seitenansicht des Gebäudemoduls aus Fig. 8a;
- Fig. 9: eine schematische Seitenschnittansicht des Gebäudemoduls mit Wärmeübertragungselementen, die eine Mehrzahl von Funktionsflächen und eine polygonale Querschnittsfläche aufweisen;
- Fig. 10a, b: schematische Schnittansichten von Fluidleitungen mit Führungsleiste(n) zum Verbinden der Wärmeübertragungselemente; und
- Fig. 11: eine schematische Schnittansicht zur Erläuterung der Lagerung der Wärmeübertragungselemente mittels Abstandselementen.

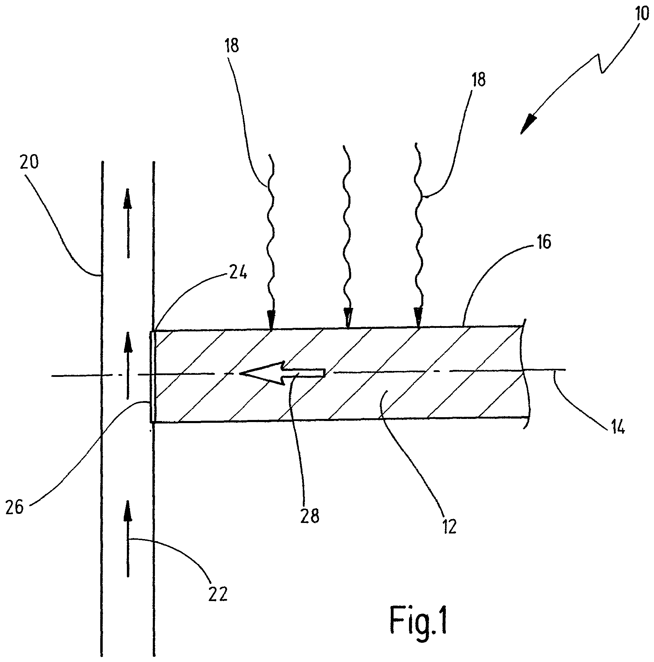

In Fig. 1 ist eine schematische Teilansicht eines Gebäudemoduls dargestellt, das allgemein mit 10 bezeichnet ist. Das Gebäudemodul 10 weist eine hier nicht dargestellte Innenscheibe und eine parallel dazu angeordnete, hier nicht dargestellte Außenscheibe auf, die parallel zu der Zeichnungsebene von Fig. 1 verlaufen und im Folgenden näher erläutert sind. Derartige Gebäudemodule 10 dienen dazu, ein Gebäude zu verkleiden, beispielsweise als Fassadenmodul, Dachmodul oder Fenstermodul und können als Sonnenenergiemodul 10 und/oder als Isolationsmodul 10 ausgebildet sein.

Das Gebäudemodul 10 weist ein Wärmeübertragungselement 12 bzw. ein Absorberelement 12 auf, das als langgestrecktes Element ausgebildet ist und eine Längsachse 14 aufweist. Das Absorberelement 12 weist an einer Außenfläche eine Funktionsfläche 16 auf, die zum Absorbieren von Sonnenstrahlen 18 ausgebildet ist. Die Funktionsfläche 16 ist mit dem Absorberelement 12 thermisch kontaktiert, so dass die von der Funktionsfläche 16 absorbierten Sonnenstrahlen 18 das Absorberelement 12 erwärmen.

Das Gebäudemodul 10 weist ferner eine Fluidleitung 20 auf, in der ein Wärmetransportmedium 22 geführt ist. Die Fluidleitung 20 und die Funktionsfläche 16 sind in senkrechter Blickrichtung auf die Funktionsfläche 16 bzw. in senkrechter Projektion der Funktionsfläche 16 nebeneinander angeordnet.

Das Absorberelement 12 ist an einem axialen Ende 24 mit dem Wärmetransportmedium 22 mittels eines thermischen Kontakts 26 thermisch kontaktiert, um Wärme zwischen dem Absorberelement 12 und dem Wärmetransportmedium 22 auszutauschen. Dabei ist der Abschnitt der Fluidleitung 20, an dem der thermische Kontakt 26 ausgebildet ist, in senkrechter Blickrichtung auf die Funktionsfläche 16 neben der Funktionsfläche 16 angeordnet. Ferner ist das Absorberelement 12 an dem axialen Ende 24 an der Fluidleitung 20 gelagert.

Das Absorberelement 12 ist als Wärmeleiter ausgebildet, so dass Wärme, die durch die einstrahlende Sonnenstrahlung in der Funktionsfläche 16 bzw. in dem Absorberelement 12 erzeugt wird, durch Wärmeleitung zu dem thermischen Kontakt 26 transportiert wird und mittels des thermischen Kontakts 26 über Konvektion an das Wärmetransportmedium 22 abgegeben wird. Da der thermische Kontakt 26 an dem axialen Ende 24 des Absorberelements 12 ausgebildet ist und die Funktionsfläche 16 über die Länge des Absorberelements 12 ausgebildet ist, wird ein Wärmestrom 28 durch Wärmeleitung in dem Absorberelement 12 erzeugt, der in axialer Richtung des Absorberelements 12 bzw. parallel zu der Längsachse 14 verläuft.

Mit anderen Worten ist der thermische Kontakt 26 und die Funktionsfläche 16 in axialer Richtung des Absorberelements 12 versetzt zueinander oder nebeneinander angeordnet bzw. sind die Funktionsfläche 16 und die Fluidleitung 20 in senkrechter Blickrichtung auf die Funktionsfläche 16 versetzt zueinander oder teilweise oder vollständig nebeneinander angeordnet. Der thermische Kontakt 26 ist alternativ ausgedrückt in senkrechter Blickrichtung auf die Funktionsfläche 16 lediglich an einem seitlichen Endabschnitt ausgebildet.

Das Absorberelement 12 ist als Vollkörper ausgebildet, d.h. das Absorberelement 12 weist keinen Hohlraum auf, um eine möglichst gute Wärmeleitung in axialer Richtung zu ermöglichen. Das Absorberelement 12 ist aus einem gut wärmeleitenden Material, z.B. aus einem Metall wie Kupfer oder Aluminium gebildet. Das Wärmetransportmedium 22 wird orthogonal zu der Längsachse 14 an dem thermischen Kontakt 26 vorbeigeführt, um einen Wärmeaustausch zwischen dem Wärmetransportmedium 22 und dem thermischen Kontakt 26 zu ermöglichen.

Dadurch, dass ein Wärmetransport zwischen der Funktionsfläche 16 und dem thermischen Kontakt 26 durch Wärmeleitung erfolgt, kann das Absorberelement 12 in besonders kompakter Bauform und mit geringem technischem Aufwand gefertigt werden und zwischen der Innenscheibe und der Außenscheibe eines Fensters angeordnet werden, so dass die Durchsicht durch die Scheiben nur wenig beeinträchtigt wird. Das so erwärmte Wärmetransportmedium 22 kann beispielsweise zum Erwärmen eines Innenraums eines Gebäudes genutzt werden oder aber die Wärme kann gespeichert werden, um bei geringerer Sonneneinstrahlung 18 das Absorberelement 12 zu erwärmen, wie es im Weiteren näher erläutert ist.

Das Wärmeübertragungselement 12 bzw. das Absorberelement 12 kann jede beliebige Form aufweisen, insbesondere eine runde, quadratische oder rechteckige Grundfläche aufweisen. Alternativ zu der hier beschriebenen langgestreckten Form kann das Wärmeübertragungselement 12 auch als Platte ausgebildet sein, die an einer seitlichen Kante mittels des thermischen Kontakts 26 mit der Fluidleitung 20 kontaktiert und gleichzeitig an der Fluidleitung 20 mechanisch gelagert ist. Dabei sind die Fluidleitung 20 und die Funktionsfläche 16 in einer senkrechten Projektion der Funktionsfläche 16 seitlich versetzt zueinander oder nebeneinander angeordnet.

In einer bevorzugten Ausführungsform ist die Funktionsfläche 16 geschwärzt oder eloxiert, um die Wärmeübertragung auf die Funktionsfläche 16 zu verbessern.

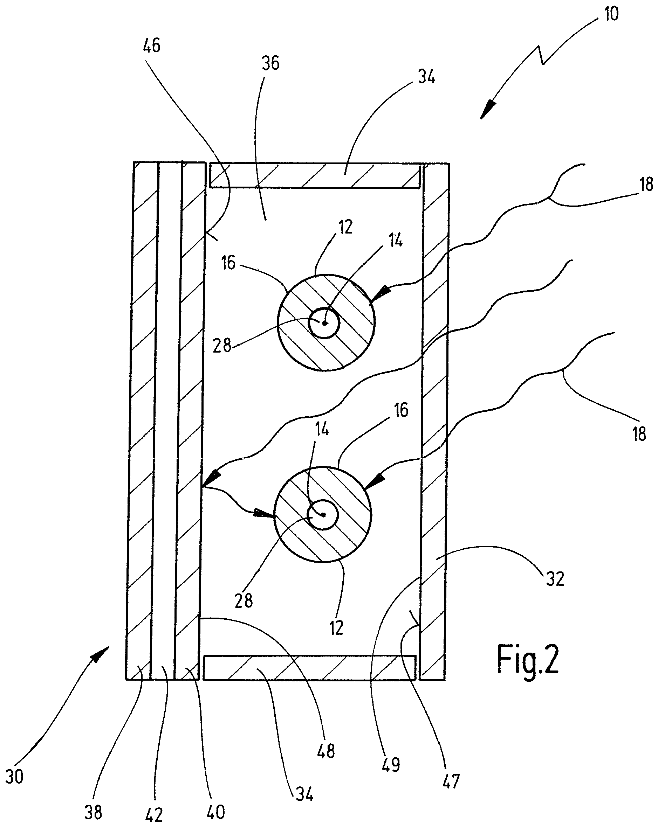

In Fig. 2 ist das Gebäudemodul 10 aus Fig. 1 in einer schematischen Seitenschnittansicht gezeigt. Gleiche Elemente sind mit gleichen Bezugsziffern bezeichnet, wobei hier lediglich Besonderheiten erläutert sind.

Das Gebäudemodul 10 weist eine Innenscheibe 30 und eine Außenscheibe 32 auf, die parallel zueinander angeordnet sind und mittels Verbindungselementen 34 miteinander verbunden sind. Zwischen der Innenscheibe 30 und der Außenscheibe 32 ist ein Zwischenraum 36 gebildet, in dem die Absorberelemente 12 angeordnet sind.

Die Längsachsen 14 der Absorberelemente 12 verlaufen im Wesentlichen parallel zu der Innenscheibe 30 und der Außenscheibe 32 und in der Darstellung aus Fig. 2 senkrecht zur Zeichenebene.

Die Innenscheibe 30 ist als Isolierglasscheibe ausgebildet und weist zwei separate Scheiben 38, 40 auf, die durch ein Vakuum 42 oder eine Gasfüllung voneinander getrennt sind. Alternativ kann die Scheibe 30 auch als Einzelscheibe ausgebildet sein.

An einer dem Zwischenraum 36 zugewandten Oberfläche 46 der Innenscheibe 30 ist eine Infrarotreflexionsschicht 48 angeordnet, um Infrarotstrahlung oder andere Wellenlängen der einstrahlenden Sonnenstrahlen 18 in den Zwischenraum 36 bzw. auf die Funktionsflächen 16 der Absorberelemente 12 zu reflektieren. An einer dem Zwischenraum 36 zugewandten Oberfläche 47 der Außenscheibe 32 ist eine Infrarotreflexionsschicht 49 angeordnet, um reflektierte Infrarotstrahlung oder andere Wellenlängen in dem Zwischenraum 36 zu reflektieren. Die Reflexionsschichten 48, 49 sind für sichtbares Licht transparent ausgebildet.

Die Außenscheibe 32 ist transparent ausgebildet, um die Sonnenstrahlen 18 in den Zwischenraum 36 zu transmittieren, so dass die auf die Funktionsfläche 16 auftreffenden Sonnenstrahlen 18 die Absorberelemente 12 erwärmen können. Infrarotstrahlung der Sonnenstrahlen 18, die durch den Zwischenraum 36 hindurch auf die Innenscheibe 30 treffen, werden durch die Infrarotreflexionsschicht 48 reflektiert und wenigstens teilweise auf die Funktionsflächen 16 der Absorberelemente 12 reflektiert. Die so reflektierten Infrarotstrahlen können von der zweiten Infrarotreflexionsschicht 49 in dem Zwischenraum 36 reflektiert werden, um so einen Wärmestau zu erzeugen. Dadurch kann der Wirkungsgrad der Nutzung der einstrahlenden Sonnenstrahlen 18 erhöht werden.

Das Gebäudemodul 10 wird vorzugsweise an Gebäuden angeordnet und dient als Fassadenmodul, Dachmodul oder Fenstermodul, um die einstrahlende Sonnenenergie entsprechend zu nutzen. Dabei ist die Innenscheibe 30 einer Außenwand des Gebäudes oder einem Innenraum des Gebäudes zugewandt und die Außenscheibe 32 einer Umgebung des Gebäudes zugewandt. Die Innenscheibe 30 kann je nach Anwendung als Fassadenmodul nicht transparent oder als Fenstermodul transparent ausgebildet sein.

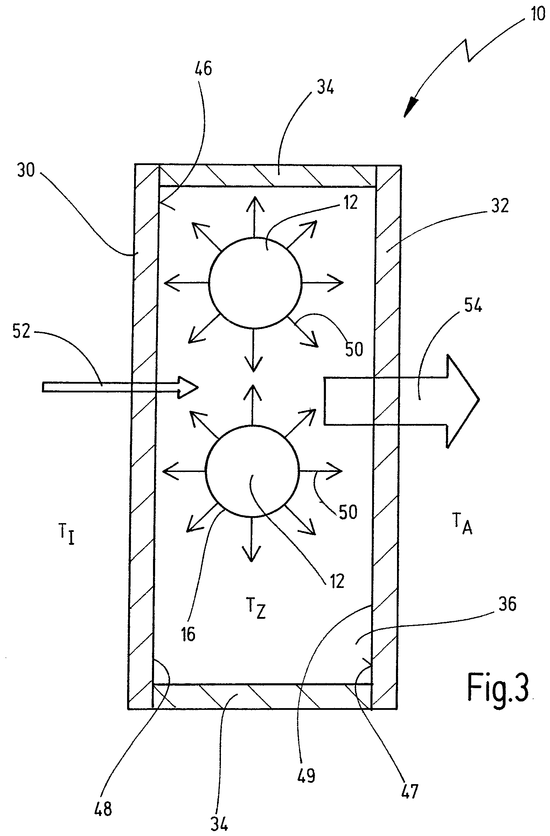

Fig. 3 zeigt eine schematische Seitenschnittansicht des Gebäudemoduls 10. Gleiche Elemente sind mit gleichen Bezugsziffern bezeichnet, wobei hier lediglich Besonderheiten erläutert sind.

In der in Fig. 3 dargestellten Funktion dient das Gebäudemodul 10 zur Isolierung eines Innenraums bzw. des Gebäudes allgemein gegenüber einem Außenbereich, wobei der Innenraum bzw. im Innenbereich eine Innentemperatur T_{I} und der Außenbereich eine Außentemperatur T_{A} aufweist. In der hier dargestellten Situation ist die Außentemperatur T_{A} kleiner als die Innentemperatur T_{I}, so dass sich unter normalen Umständen beispielsweise bei Verwendung einer normalen Isolierglasscheibe oder einer normalen Isolierung ein Wärmestrom von innen nach außen hin ausbilden würde.

Der Zwischenraum 36 ist in der hier dargestellten Ausführungsform gasdicht abgeschlossen durch die Innenscheibe 30, die Außenscheibe 32 und die Verbindungselemente 34 und mit einem gasförmigen Medium, z.B. einem Inertgas wie Argon, gefüllt. In der in Fig. 3 dargestellten Situation wird thermische Energie von dem Wärmetransportmedium 22 über den thermischen Kontakt 26 auf die Wärmeübertragungselemente 12 übertragen, so dass über die Funktionsflächen 16 Wärme an das gasförmige Medium abgegeben wird, wie es durch Pfeile 50 angedeutet ist. Dadurch wird eine Zwischenraumtemperatur T_{Z} des gasförmigen Mediums in dem Zwischenraum 36 erhöht und an die Innentemperatur T_{I} angepasst. Dadurch kann ein Temperaturgradient zwischen dem Innenraum und dem Zwischenraum 36 reduziert werden, so dass ein durch den Temperaturgradienten entstehender innerer Wärmefluss 52 durch die Innenscheibe 30 hindurch reduziert wird. Ferner entsteht ein äußerer Wärmefluss 54 durch die Außenscheibe 32 entsprechend dem Temperaturgradienten zwischen der Zwischenraumtemperatur T_{Z} und der Außentemperatur T_{A}. Durch das Anpassen bzw. Anheben der Zwischenraumtemperatur T_{Z} an die Innentemperatur T_{I} kann der innere Wärmefluss 52 sehr stark reduziert werden, wodurch der Wärmeverlust aus dem Innenraum sehr stark reduziert werden kann bzw. der Innenraum gegenüber dem Außenbereich sehr gut isoliert werden kann.

Bei diesem Prozess wird vorzugsweise thermische Energie in dem Wärmetransportmedium 22 verwendet, die durch die Sonnenstrahlen 18 erzeugt wurde und beispielsweise in einem Wärmespeicher zwischengespeichert wurde. Dadurch kann Sonnenenergie genutzt und zwischengespeichert werden und zur Isolation des Innenraums gegenüber dem Außenbereich genutzt werden. In einer besonderen Ausführungsform kann das Wärmetransportmedium 22 auch durch eine zusätzliche Energiequelle geheizt werden, um die Zwischenraumtemperatur T_{Z} entsprechend anzuheben und somit eine verbesserte Isolierung des Innenraums gegenüber dem Außenbereich zu erzielen.

In ähnlicher Weise kann das gasförmige Medium durch die Wärmeübertragungselemente 12 auch gekühlt werden bzw. es kann durch die Wärmeübertragungselemente 12 Wärme von dem gasförmigen Medium auf das Wärmetransportmedium 22 übertragen werden, um das gasförmige Medium und somit den Zwischenraum 36 zu kühlen. Dadurch kann der innere Wärmestrom 52 erhöht werden, wodurch die Innentemperatur T_{I} reduziert und somit der Innenraum gekühlt bzw. klimatisiert werden kann. Bei diesem Prozess kann das Wärmetransportmedium 22 beispielsweise durch eine Kühlanlage gekühlt werden.

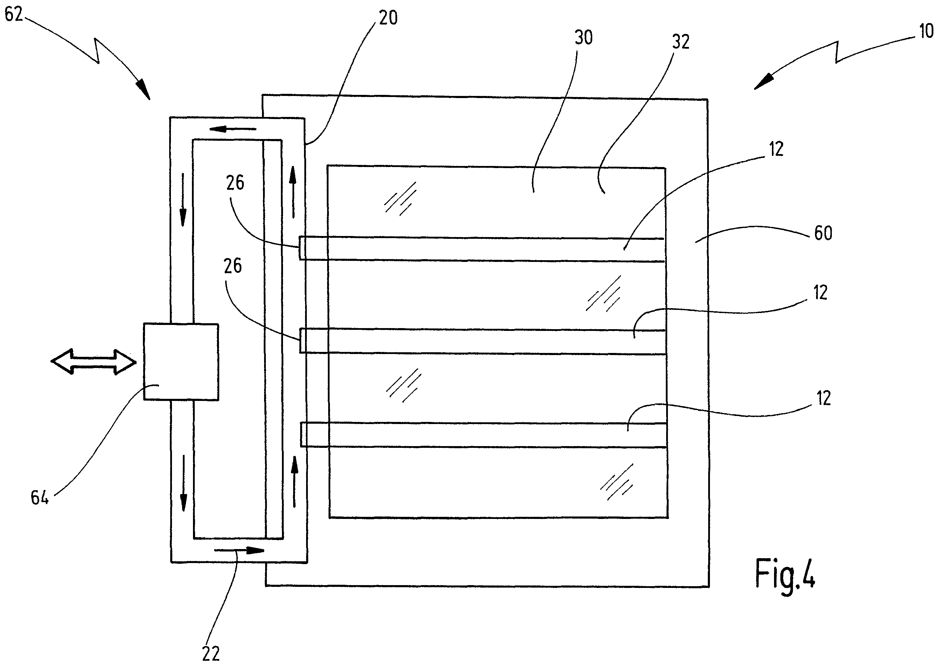

In Fig. 4 ist das Gebäudemodul 10 schematisch mit einem Fluidsystem dargestellt. Gleiche Elemente sind mit gleichen Bezugsziffern bezeichnet, wobei hier lediglich die Besonderheiten erläutert sind.

Das Gebäudemodul 10 weist drei der Wärmeübertragungselemente 12 auf, die zwischen der Innenscheibe 30 und der Außenscheibe 32 angeordnet sind und sich über die gesamte Breite des Gebäudemoduls 10 erstrecken. Das Gebäudemodul 10 bildet in der in Fig. 4 dargestellten Ausführungsform ein Gebäudefenster.

Das Gebäudemodul 10 weist einen Rahmen 60 auf, der die Innenscheibe 30 und die Außenscheibe 32 lagert. In dem Rahmen 60 ist die Fluidleitung 20 angeordnet, in der das Wärmetransportmedium 22 geführt ist und das mit den drei Wärmeübertragungselementen 12 thermisch kontaktiert ist. Das Wärmetransportmedium 22 ist jeweils über einen der thermischen Kontakte 26 mit jeweils einem der Wärmeübertragungselemente 12 thermisch verbunden. Die Fluidleitung 20 ist mittels eines Abstandhalters von den Scheiben 30, 32 thermisch getrennt, um eine thermische Isolation zu verbessern und mechanische Spannungen zu reduzieren.

Die Fluidleitung 20 ist Teil eines Fluidsystems, das in Fig. 4 allgemein mit 62 bezeichnet ist. Das Fluidsystem 62 weist einen Fluidkreislauf und einen Wärmetauscher 64 auf, um das Wärmetransportmedium 22 zu zirkulieren und entsprechend Wärme von den Wärmeübertragungselementen 12 abzuführen oder Wärme den Wärmeübertragungselementen 12 zuzuführen. Der Wärmetauscher 64 tauscht Wärme mit einem hier nicht dargestellten thermischen System aus, wie z.B. einer Innenraumheizung zum Heizen des Innenraums des Gebäudes, einem Wärmespeicher zum Speichern der von den Wärmeübertragungselementen 12 absorbierten thermischen Energie oder einer Wärmepumpe zum Abführen bzw. Zuführen von thermischer Energie. Der Wärmetauscher 64 weist eine hier nicht näher dargestellte Pumpe auf, um das Wärmetransportmedium 22 in dem Fluidsystem 62 umzupumpen. Der Wärmeaustausch zwischen dem Wärmetauscher 64 und den Wärmeübertragungselementen 12 erfolgt dabei vorzugsweise über Einstellen eines Massenflusses des Wärmetransportmediums 22 in der Fluidleitung 20. In dem Zwischenraum 36 ist ein Temperatursensor angeordnet und auf der Grundlage der so gemessenen Zwischenraumtemperatur T_{Z} wird der Massenfluss bzw. die Pumpleistung eingestellt.

Auf diese Weise kann mit einfachen Mitteln thermische Energie von den Wärmeübertragungselementen 12 abgeführt werden, um die thermische Energie entsprechend zu nutzen oder thermische Energie den Wärmeübertragungselementen 12 zugeführt werden, um den Zwischenraum 36 zu erwärmen und dadurch den inneren Wärmefluss 52 zu reduzieren oder der Zwischenraum 36 durch Wärmeentzug gekühlt werden. In einer besonderen Ausführungsform kann die thermische Energie auch zur Kühlung der Innenräume genutzt werden, beispielsweise mittels einer Wärmepumpe.

In einer besonderen Ausführungsform sind mehrere der Gebäudemodule 10 über das Fluidsystem 62 und/oder den Wärmetauscher verbunden, um thermische Energie zwischen den Gebäudemodulen 10 auszutauschen. Dabei kann beispielsweise Sonnenenergie von bestrahlten Gebäudemodulen 10 an unbestrahlte, beispielsweise sonnenabgewandte Module 10 übertragen werden, um den inneren Wärmestrom 52 dort zu reduzieren und das Gebäude zu isolieren.

In Fig. 4 ist die Fluidleitung 20 an einer Seite in dem Rahmen 60 ausgebildet. Es versteht sich, dass die Fluidleitung 20 auch an mehreren oder allen Seiten des Rahmens 60 ausgebildet sein kann. Ferner können unterschiedliche Fluidleitungen 20 in dem Rahmen 60 ausgebildet sein, die unterschiedlichen Fluidsystemen 62 zugeordnet sind.

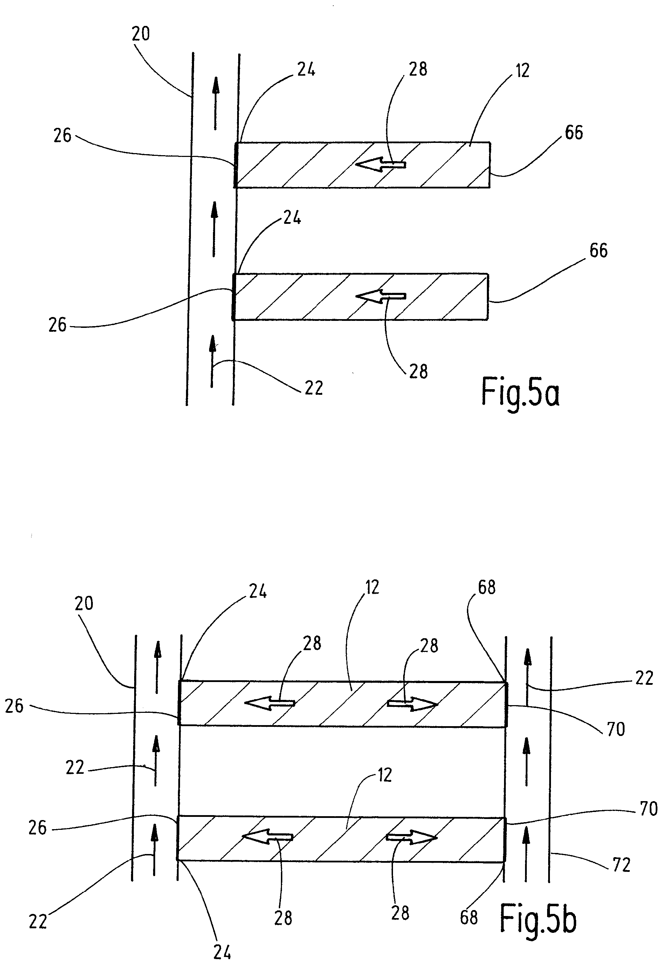

In Fig. 5a ist eine Ausführungsform der Wärmeübertragungselemente 12 bzw. der Absorberelemente 12 schematisch dargestellt. Dabei weisen die Wärmeübertragungselemente 12 jeweils das axiale Ende 24 auf, an dem der thermische Kontakt 26 ausgebildet ist, um Wärme zwischen dem Wärmeübertragungselement 12 und dem Wärmetransportmedium 22 auszutauschen. Die Wärmeübertragungselemente 12 weisen jeweils ferner ein freies Ende 66 auf, das dem axialen Ende 24 gegenüberliegt. Dadurch kann Sonnenenergie von der Funktionsfläche 16 aufgenommen oder Wärme von der Funktionsfläche 16 an den Zwischenraum 36 abgegeben werden, wobei gleichzeitig ein mittlerer Abschnitt eines so gebildeten Fensters frei bleibt, wodurch eine verbesserte Durchsicht durch das Fenster ermöglicht wird. Der thermische Kontakt 26 ist lediglich an dem axialen Ende 24 ausgebildet. In dem Wärmeübertragungselement 12 aus Fig. 5a wird somit der Wärmetransport 28 durch Wärmeleitung lediglich in einer axialen Richtung ausgebildet.

In Fig. 5b ist eine alternative Ausführungsform der Wärmeübertragungselemente 12 bzw. der Absorberelemente 12 dargestellt. Dabei weisen die Wärmeübertragungselemente an dem axialen Ende 24 den thermischen Kontakt 26 zum Austausch von Wärmeenergie mit dem Wärmetransportmedium 22 auf. Ferner weisen die Wärmeübertragungselemente 12 an einem dem axialen Ende 24 gegenüberliegende Ende 68 jeweils einen weiteren thermischen Kontakt 70 auf, der vorzugsweise identisch ist mit dem thermischen Kontakt 26. Der thermische Kontakt 70 ist einer weiteren Fluidleitung 72 zugeordnet, die mit der ersten Fluidleitung 20 verbunden sein kann.

Die thermischen Kontakte 26, 70 sind lediglich an den axialen Enden 24, 68 ausgebildet. Dadurch bilden sich in den Wärmeübertragungselementen 12 jeweils zwei Wärmeströme 28 durch Wärmeleitung aus, die in entgegengesetzten Richtungen zu den thermischen Kontakten 26, 70 hin gerichtet sind.

Die Wärmeübertragungselemente 12 können in einem Abschnitt zwischen den thermischen Kontakten 26, 70 ein Kompensationselement zur Kompensation von thermischer Ausdehnung aufweisen.

In einer besonderen Ausführungsform ist der thermische Kontakt 26 an einem Axialabschnitt des Wärmeübertragungselementes 12 gebildet, der in axialer Richtung zwischen zwei Funktionsflächen 16 gebildet ist.

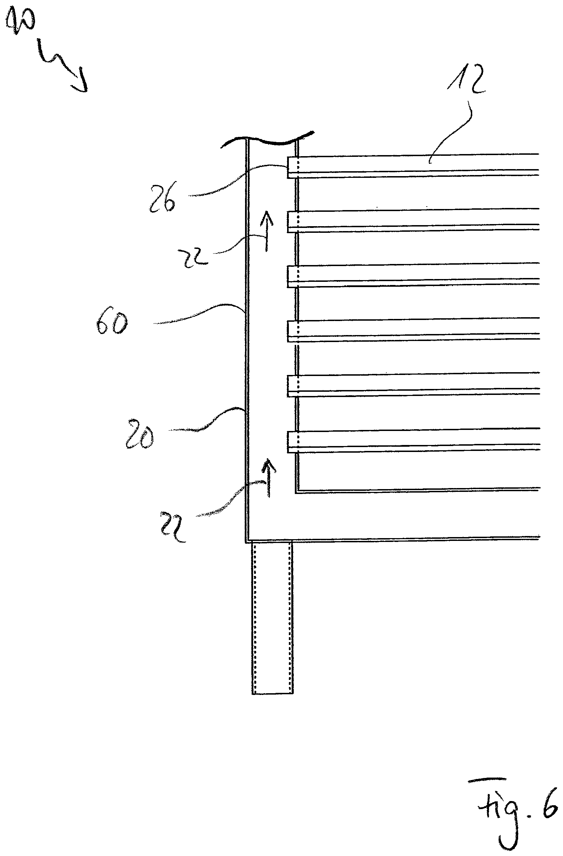

In Fig. 6 ist eine schematische Teilansicht eines Gebäudemoduls 10 mit dem Rahmen 60 dargestellt, um den thermischen Kontakt 26 zu erläutern. In der in Fig. 6 dargestellten Ausführungsform ragen die Wärmeübertragungselemente 12 in die Fluidleitung 20 hinein, so dass eine vergrößerte Oberfläche als der thermische Kontakt 26 gebildet wird. Dadurch kann der Wärmeübergang zwischen dem Wärmeübertragungselement 12 und dem Wärmetransportmedium 22 verbessert werden.

In dieser Ausführungsform können die thermischen Kontakte 26 mit einer Rippenstruktur ausgebildet sein, um eine Oberfläche des thermischen Kontakts 26 zu vergrößern und dadurch den Wärmeübergang zu verbessern.

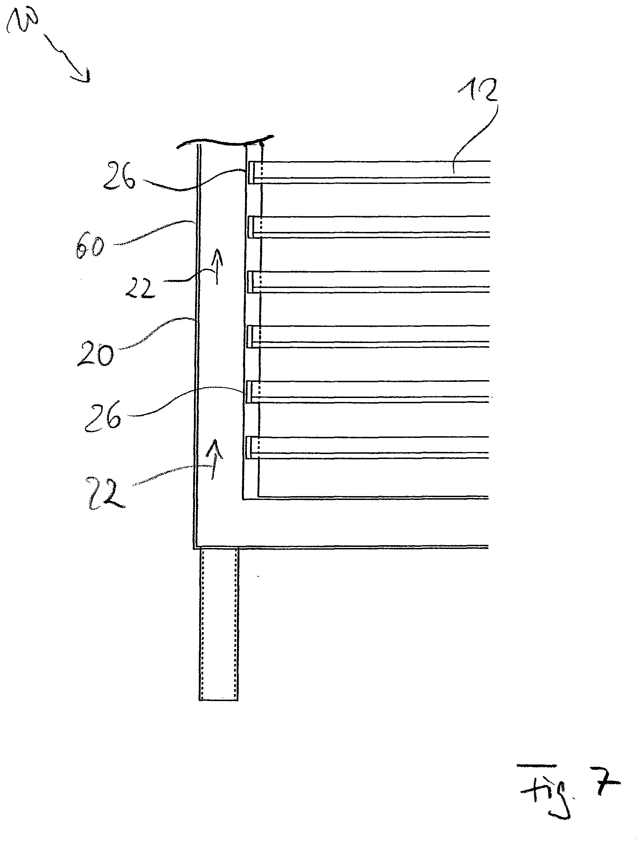

In Fig. 7 ist eine alternative Ausführungsform des thermischen Kontakts 26 schematisch dargestellt.

Die Wärmeübertragungselemente 12 sind dabei äußerlich mit der Fluidleitung 20 verbunden, so dass die Wärme von dem Wärmeübertragungselement 12 auf die Fluidleitung 20 und von der Fluidleitung 20 auf das Wärmetransportmedium 22 übertragen wird. Dabei bildet die Außenwand der Fluidleitung 20 und eine Kontaktfläche zwischen dem Wärmeübertragungselement 12 und der Fluidleitung 20 den thermischen Kontakt 26. Vorteil dieser Ausführungsform des thermischen Kontakts 26 ist es, dass die Fluidleitung 20 mit geringerem technischem Aufwand abgedichtet werden kann und die Kontaktierung der Absorberelemente 12 mit geringem Aufwand bereitgestellt werden können. Beispielsweise können in dieser Ausführungsform die Wärmeübertragungselemente 12 an die Fluidleitung 20 angeschweißt werden.

In einer besonderen Ausführungsform kann die Fluidleitung 20 Einbuchtungen aufweisen, in die die Endabschnitte 24 der Wärmeübertragungselemente 12 eingeführt sind und mit der Fluidleitung 20 den thermischen Kontakt 26 bilden. Dadurch kann auf eine aufwendige Abdichtung der Fluidleitung 20 verzichtet werden.

In einer besonderen Ausführungsform ist der thermische Kontakt 26 elastisch ausgebildet, beispielsweise durch eine Thermopaste oder einen federnden Kontakt, um die thermische Ausdehnung der Wärmeübertragungselemente 12 zu kompensieren. In einer weiteren Ausführungsform sind die Fluidleitungen 20 beweglich gelagert, um die thermische Ausdehnung der Wärmeübertragungselemente 12 auszugleichen.

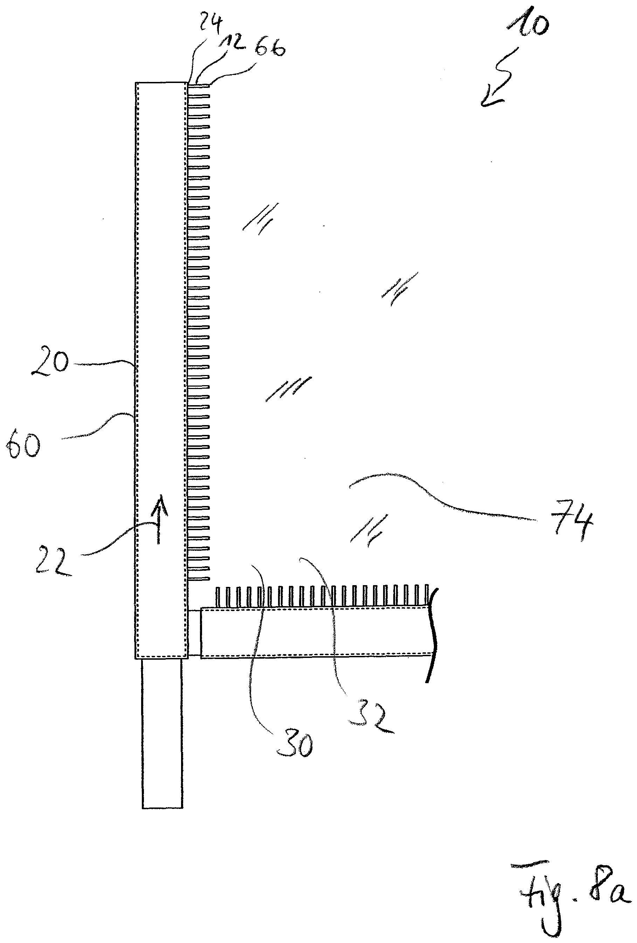

In Fig. 8a ist eine schematische Teilansicht des Gebäudemoduls 10 dargestellt mit Wärmeübertragungselementen 12 bzw. Absorberelementen 12 der Ausführungsform aus Fig. 5a. Dabei sind die Wärmeübertragungselemente 12 mittels des jeweiligen Endes 24 mit der Fluidleitung 20 thermisch kontaktiert. Das jeweilige freie Ende 66 ragt in den Zwischenraum 36 hinein, so dass ein Innenbereich 74 des Sonnenenergiemoduls 10 frei bleibt und eine geringfügig eingeschränkte Durchsicht durch die Scheiben 30, 32 ermöglicht.

In dieser Ausführungsform sind die Wärmeübertragungselemente 12 sowohl an einer senkrechten Seite des Rahmens 60 als auch an einer horizontalen Seite des Rahmens 60 ausgebildet. Dadurch kann der Wirkungsgrad des Gebäudemoduls 10 erhöht werden.

In einer weiteren Ausführungsform können die Absorberelemente 12 auch schräg zueinander angeordnet sein und miteinander verbunden sein, so dass ein Gitter bzw. ein Geflecht von Wärmeübertragungselementen 12 gebildet wird.

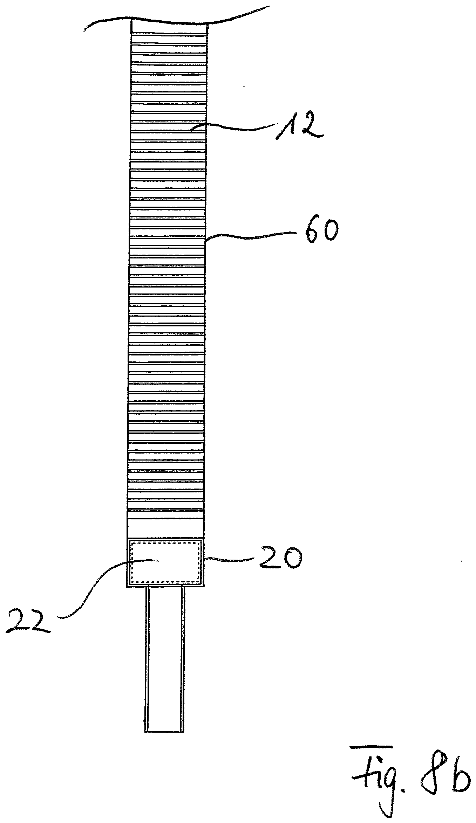

In Fig. 8b ist eine Seitenansicht des Rahmens 60 des Gebäudemoduls 10 aus Fig. 8a dargestellt. Gleiche Elemente sind mit gleichen Bezugsziffern bezeichnet, wobei hier lediglich die Besonderheiten erläutert sind.

Die Grundfläche der Wärmeübertragungselemente 12 bzw. der Absorberelemente 12 ist in dieser Ausführungsform länglich bzw. rechteckig ausgebildet, so dass die Wärmeübertragungselemente 12 als horizontal angeordnete Platten ausgebildet sind. Alternativ können diese plattenförmigen Wärmeübertragungselemente 12 auch senkrecht angeordnet sein bzw. parallel zu einer Längsachse des jeweiligen Rahmenelements bzw. der zugeordneten Fluidleitung 20.

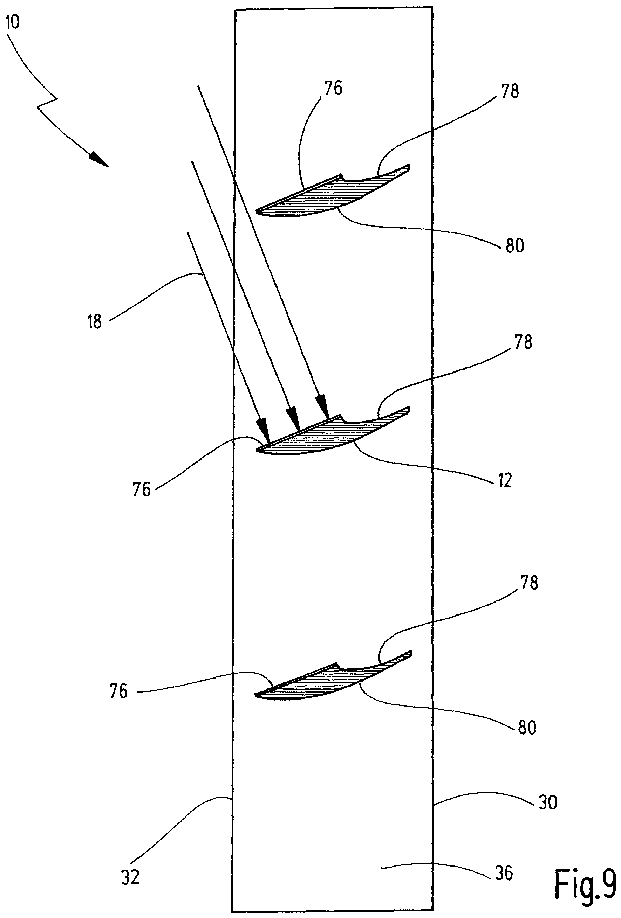

In Fig. 9 ist eine besondere Ausführungsform des Gebäudemoduls 10 dargestellt mit Absorberelementen 12, die einen polygonalen Querschnitt aufweisen. Dabei weist der Querschnitt eine ebene Funktionsfläche 76 auf und zwei gebogene Funktionsflächen 78, 80 auf. Die Absorberelemente 12 können dabei um die Längsachse 14 drehbar gelagert und können entsprechend zu den Sonnenstrahlen 18 ausgerichtet werden. Dabei kann die gerade Funktionsfläche 76 derart ausgerichtet werden, dass die Sonnenstrahlen 18 orthogonal auf die gerade Funktionsfläche 76 treffen. In einer bevorzugten Ausführungsform ist an der geraden Funktionsfläche 76 eine photovoltaische Einheit angeordnet, um elektrische Energie durch die einstrahlende Sonnenstrahlung 18 zu erzeugen. Die Funktionsflächen 78, 80 sind dazu ausgebildet, die einstrahlenden Sonnenstrahlen 18 zu reflektieren und/oder zu absorbieren, um den Innenraum zu beleuchten und/oder das Wärmetransportmedium 22 zu erwärmen. In einer vereinfachten Variante können die Absorberelemente 12 auch fest gelagert sein.

Die Funktionsfläche 78 ist dabei konkav ausgebildet und die Funktionsfläche 80 ist konvex ausgebildet.

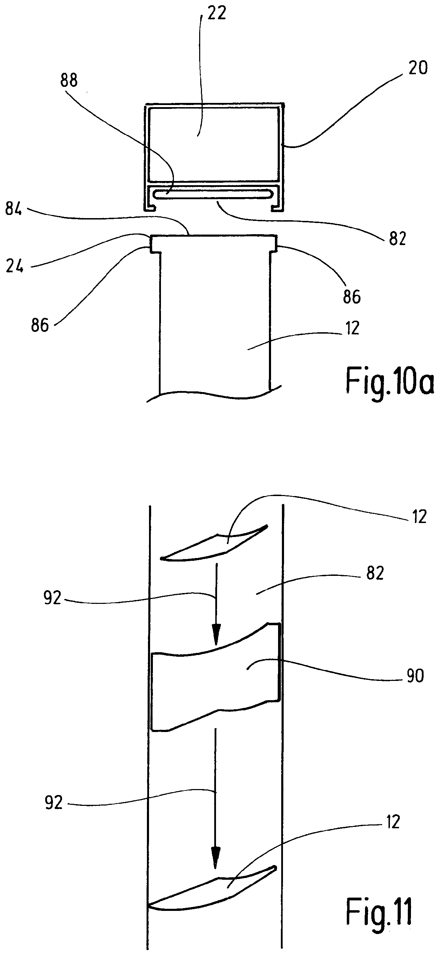

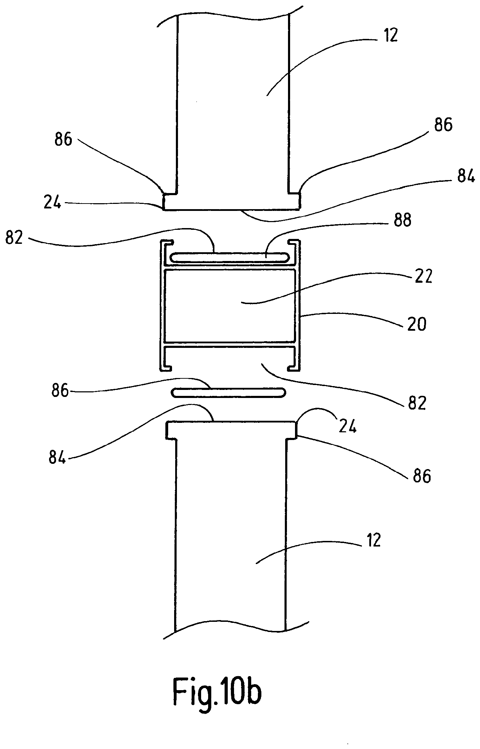

In den Fig. 10a und b sind jeweils schematische Schnittdarstellungen von Ausführungsformen der Fluidleitung 20 und der Wärmeübertragungselemente 12 dargestellt. Gleiche Elemente sind mit gleichen Bezugsziffern bezeichnet, wobei hier lediglich die Besonderheiten erläutert sind.

Die Fluidleitung 20 aus Fig. 10a weist eine Führungsleiste 82 auf, die sich in einer Längsrichtung der Fluidleitung 20 an der Außenseite der Fluidleitung 20 erstreckt. Die Führungsleiste 82 weist zwei gegenüberliegende L-förmige Führungsabschnitte auf. Die Führungsleiste 82 ist dazu ausgebildet, einen Verbindungsabschnitt 84, der an dem axialen Ende 24 des Wärmeübertragungselements 12 ausgebildet ist, aufzunehmen und entsprechend das Wärmeübertragungselement 12 in einer seitlichen Richtung quer zu der Längsrichtung der Fluidleitung 20 zu lagern und zu fixieren. Der Führungsabschnitt 84 weist in der hier dargestellten Ausführungsform seitliche Fortsätze 86 auf, die hinter die L-förmigen Führungsabschnitte bzw. Führungsnuten der Führungsleiste 82 greift, um das Wärmeübertragungselement 12 zu lagern. In einer alternativen Ausführungsform weist das axiale Ende 24 keine seitlichen Fortsätze 86 auf und ist im wesentlichen geradlinig ausgebildet, wobei zur Axialführung die Fluidleitung 20 als Axialanschlag dient.

An einem axialen Ende der Fluidleitung 20 bzw. der Führungsleiste 82 ist eine Einschuböffnung ausgebildet, in die der Führungsabschnitt 84 des axialen Endes 24 des Wärmeübertragungselements 12 in die Führungsleiste 82 eingeführt wird und dann in der axialen Richtung in der Führungsleiste 82 bewegt wird, um das Wärmeübertragungselement 12 zu montieren.

In Fig. 10a ist lediglich ein axiales Ende 24 des Wärmeübertragungselements 12 dargestellt, beispielsweise für Wärmeübertragungselemente 12 mit einem gegenüberliegenden freien Ende 66. Es versteht sich, dass die Führungsleiste 82 und der Führungsabschnitt 84 auch an gegenüberliegenden Enden des Wärmeübertragungselements 12 ausgebildet sein können, um das Wärmeübertragungselement 12 beidseitig zu laqern.

In Fig. 10b ist eine alternative Ausführungsform der Fluidleitung 20 mit beidseitigen Führungsleisten 82 schematisch dargestellt. Gleiche Elemente sind mit gleichen Bezugsziffern bezeichnet, wobei hier lediglich die Besonderheiten erläutert sind.

An gegenüberliegenden Seiten weist die Fluidleitung 20 jeweils eine der Führungsleisten 82 auf, in die entsprechend zwei Verbindungsabschnitte 84 von zwei Wärmeübertragungselementen 12 eingreifen können, um die Wärmeübertragungselemente 12 entsprechend zu lagern.

Bei der Montage werden die Wärmeübertragungselemente 12 entsprechend durch die Einführöffnung in die Führungsleiste 82 eingeführt und mittels eines Abstandselements, das ebenfalls in die Führungsleiste 82 eingeführt wird, voneinander beabstandet und entsprechend gegeneinander abgestützt. Dadurch können die Wärmeübertragungselemente 12 fest gelagert werden und mit technisch geringem Aufwand montiert werden. Der thermische Kontakt 26 wird dann durch ein separates thermisches Kontaktelement 88 oder durch eine thermisch leitfähige Paste 88 gebildet.

In Fig. 11 ist eine seitliche schematische Ansicht der Führungsleiste 82 dargestellt. Gleiche Elemente sind mit gleichen Bezugsziffern bezeichnet, wobei hier lediglich die Besonderheiten erläutert sind.

Die Wärmeübertragungselemente 12 und Abstandselemente 90 werden abwechselnd in die Führungsleiste 82 eingeführt, wie es durch Pfeile 92 angedeutet ist, um die Wärmeübertragungselemente 12 entsprechend zu beabstanden und gegeneinander abzustützen. Die Abstandselemente 90 weisen dabei entsprechend eine zu den Wärmeübertragungselementen 12 komplementäre Außenform auf, so dass die Wärmeübertragungselemente 12 entsprechend spielfrei und fest gelagert werden können. Durch das Eigengewicht der Wärmeübertragungselemente 12 werden die Wärmeübertragungselemente 12 und die Abstandselemente 90 aufeinandergedrückt, wodurch der thermische Kontakt zwischen den Wärmeübertragungselementen 12 und den Abstandselementen 90 verbessert wird.

Dadurch ist eine einfache Montage der Wärmeübertragungselemente 12 durch einfaches abwechselndes Einstecken der Wärmeübertragungselemente und der Abstandselemente 90 möglich. In einer besonderen Ausführungsform werden die Wärmeübertragungselemente 12 und die Abstandselemente 90 beispielsweise mittels einer thermischen Leitpaste 88 thermisch miteinander verbunden und die Abstandselemente 90 ferner mit der Fluidleitung 20 thermisch verbunden, so dass der Wärmeleitungsübergang zwischen dem Wärmeübertragungselement 12 und dem Fluid 22 in der Fluidleitung 20 verbessert ist.

## Patentansprüche

1. Gebäudemodul (10), insbesondere Fassadenmodul, Dachmodul oder Fenstermodul, zur Nutzung von Sonnenenergie und/oder zur thermischen Isolierung, mit:
- einer Innenscheibe (30) und einer Außenscheibe (32), wobei zwischen der Innenscheibe (30) und der Außenscheibe (32) ein Zwischenraum (36) gebildet ist,
- einem Wärmeübertragungselement (12), insbesondere einem Absorberelement (12), das in dem Zwischenraum (36) angeordnet ist und wenigstens eine Funktionsfläche (16) zum Absorbieren von Wärmestrahlung und/oder zum Temperieren des Zwischenraums aufweist,
- einer Fluidleitung (20), in der ein Wärmetransportmedium (22) geführt ist, wobei zwischen dem Wärmeübertragungselement (12) und dem Wärmetransportmedium (22) ein thermischer Kontakt (26) gebildet ist, um Wärme zwischen dem Wärmeübertragungselement (12) und dem Wärmetransportmedium (22) auszutauschen,
wobei das Wärmeübertragungselement (12) einen Wärmeleiter zur thermischen Verbindung zwischen der Funktionsfläche (16) und dem thermischen Kontakt (26) bildet, **dadurch gekennzeichnet, dass** das Wärmeübertragungselement (12) als Vollkörper ausgebildet ist
wobei die Funktionsfläche (16) und die Fluidleitung (20), der der thermische Kontakt (26) zugeordnet ist, in senkrechter Blickrichtung auf die Funktionsfläche (16) nebeneinander angeordnet sind.

2. Gebäudemodul nach Anspruch 1 oder dem Oberbegriff von Anspruch 1 , **dadurch gekennzeichnet, dass** der Zwischenraum (36) gasdicht ausgebildet ist und mit einem gasförmigen Medium gefüllt ist, so dass Wärme zwischen dem Wärmetransportmedium (22) und dem gasförmigen Medium austauschbar ist.

3. Gebäudemodul nach einem der Ansprüche 1 oder 2, **dadurch gekennzeichnet, dass** das Wärmeübertragungselement (12) als langgestrecktes Element (12) ausgebildet ist, wobei der thermische Kontakt (26) und die Funktionsfläche (16) in axialer Richtung des Wärmeübertragungselements (12) versetzt zueinander ausgebildet sind.

4. Gebäudemodul nach einem der Ansprüche 1 bis 3, **dadurch gekennzeichnet, dass** der thermische Kontakt (26) an einem Endabschnitt (24) des Wärmeübertragungselements (12) gebildet ist.

5. Gebäudemodul nach einem der Ansprüche 1 bis 4, **dadurch gekennzeichnet, dass** der thermische Kontakt (26) an einer Stimfläche des Wärmeübertragungselementes (12) gebildet ist

6. Gebäudemodul nach Anspruch 4 oder 5, **dadurch gekennzeichnet, dass** das Wärmeübertragungselement (12) einen freien Endabschnitt (66) aufweist, an dem wenigstens ein Teil der Funktionsfläche (16) gebildet ist.

7. Gebäudemodul nach einem der Ansprüche 1 bis 5, **dadurch gekennzeichnet, dass** das Wärmeübertragungselement (12) an zwei gegenüberliegenden Endabschnitten (26, 68) jeweils einen thermischen Kontakt (26, 70) aufweist, die jeweils einer Fluidleitung (20, 72) zugeordnet sind.

8. Gebäudemodul nach einem der Ansprüche 1 bis 7, **dadurch gekennzeichnet, dass** das Wärmeübertragungselement (12) durch die Fluidleitung (20) hindurchgeführt ist und an beiden Seiten der Fluidleitung (20) jeweils eine Funktionsfläche (16) aufweist.

9. Gebäudemodul nach einem der Ansprüche 1 bis 7, **dadurch gekennzeichnet, dass** das Gebäudemodul (10) eine Mehrzahl von langgestreckten Wärmeübertragungselementen (12) aufweist, wobei Längsachsen (14) der Wärmeübertragungselemente (12) schräg zueinander angeordnet und thermisch miteinander verbunden sind.

10. Gebäudemodul nach einem der Ansprüche 1 bis 9, **dadurch gekennzeichnet, dass** der thermische Kontakt (26) in die Fluidleitung (20) hineinragt und einen konvektiven Wärmeübergang zu dem Wärmetransportmedium (22) bildet.

11. Gebäudemodul nach einem der Ansprüche 1 bis 7, **dadurch gekennzeichnet, dass** das Wärmeübertragungselement (12) an wenigstens einem axialen Endabschnitt (24, 28) mit der Fluidleitung (20) lösbar verbindbar ist.

12. Gebäudemodul nach Anspruch 11, **dadurch gekennzeichnet, dass** die Fluidleitung (20) wenigstens eine in einer Längsrichtung der Fluidleitung (20) verlaufende Führungsleiste (82) aufweist, in die der wenigstens eine axiale Endabschnitt (24) des Wärmeübertragungselements (12) einführbar ist.

13. Gebäudemodul nach Anspruch 12 , **dadurch gekennzeichnet, dass** eine Mehrzahl von Wärmeübertragungselementen (12) in der Führungsleiste (82) gelagert sind und mittels Abstandselementen (90), die in der Führungsleiste (82) gelagert sind beabstandet sind.

14. Gebäudemodul nach einem der Ansprüche 1 bis 13, **dadurch gekennzeichnet, dass** die Außenscheibe (32) aus einem transparenten Material gebildet ist und wobei eine Oberfläche (46) der Innenscheibe (30), die dem Zwischenraum (36) zugewandt ist, eine Infrarotreflexionsschicht (48) aufweist, um einstrahlende Infrarotstrahlen in den Zwischenraum (36) zu reflektieren.

15. Verfahren zum Herstellen eines Gebäudemoduls (10), insbesondere eines Fassadenmoduls, Dachmoduls oder Fenstermoduls, mit den Schritten:
- Bereitstellen einer Fluidleitung (20), in der ein Wärmetransportmedium (22) führbar ist,
- Bereitstellen eines Wärmeübertragungselements (12), insbesondere eines Absorberelements, das wenigstens eine Funktionsfläche (16) zum Absorbieren von Wärmestrahlung und/oder zum temperieren von Umgebungsluft aufweist,
- Bilden eines thermischen Kontaktes (26) zwischen dem Wärmeübertragungselement (12) und der Fluidleitung (20)
wobei das Wärmeübertragungselement (12) einen Wärmeleiter zwischen der Funktionsfläche (16) und dem thermischen Kontakt (26) bildet, und
- Verbinden einer Innenscheibe (30) und einer Außenscheibe (32) mit der Fluidleitung, so dass zwischen der Innenscheibe (30) und der Außenscheibe (32) ein Zwischenraum (36) gebildet wird, in dem das Wärmeübertragungselement (12) angeordnet ist,
**dadurch gekennzeichnet, dass** das Wärmeübertragungselement (12) als Vollkörper ausgebildet ist, und die Funktionsfläche (16) und die Fluidleitung (20) in senkrechter Blickrichtung auf die Funktionsfläche (16) nebeneinander angeordnet sind.

## Claims

1. Building module (10), in particular facade module, roof module or window module, for utilizing solar energy and/or for thermal insulation, comprising:
- an inner pane (30) and an outer pane (32), wherein an intermediate space (36) is formed between the inner pane (30) and the outer pane (32),
- a heat transfer element (12), in particular an absorber element (12), which is arranged in the intermediate space (36) and has at least one functional surface (16) for absorbing thermal radiation and/or for controlling the temperature of the intermediate space,
- a fluid line (20) in which a heat transport medium (22) is conducted, wherein a thermal contact (26) is formed between the heat transfer element (12) and the heat transport medium (22) in order to exchange heat between the heat transfer element (12) and the heat transport medium (22),
wherein the heat transfer element (12) forms a heat conductor for thermal connection between the functional surface (16) and the thermal contact (26), **characterized in that** the heat transfer element (12) is configured as a solid body, wherein the functional surface (16) and the fluid line (20), to which the thermal contact (26) is assigned, are arranged juxtaposed to one another when the functional surface (16) is viewed in a perpendicular direction.

2. Building module as claimed in claim 1 or according to the preamble of claim 1, **characterized in that** the intermediate space (36) is formed in a gastight manner and is filled with a gaseous medium so that heat is exchangeable between the heat transport medium (22) and the gaseous medium.

3. Building module as claimed in any one of claims 1 or 2, **characterized in that** the heat transfer element (12) is in the form of an elongate element (12), wherein the thermal contact (26) and the functional surface (16) are formed in a manner offset with respect to one another in the axial direction of the heat transfer element (12).

4. Building module as claimed in any one of claims 1 to 3, **characterized in that** the thermal contact (26) is formed on an end section (24) of the heat transfer element (12).

5. Building module as claimed in any one of claims 1 to 4, **characterized in that** the thermal contact (26) is formed on an end face of the heat transfer element (12).

6. Building module as claimed in claim 4 or 5, **characterized in that** the heat transfer element (12) has a free end section (66) on which at least a part of the functional surface (16) is formed.

7. Building module as claimed in any one of claims 1 to 5, **characterized in that** the heat transfer element (12) has a thermal contact (26, 70) on each of two opposite end sections (26, 68), said thermal contacts (26, 70) each being assigned to a fluid line (20, 72).

8. Building module as claimed in any one of claims 1 to 7, **characterized in that** the heat transfer element (12) is guided through the fluid line (20) and has a functional surface (16) on each of the two sides of the fluid line (20).

9. Building module as claimed in any one of claims 1 to 8, **characterized in that** the building module (10) has a plurality of elongate heat transfer elements (12), wherein the longitudinal axes (14) of the heat transfer elements (12) are arranged obliquely with respect to one another and are connected thermally to one another.

10. Building module as claimed in any one of claims 1 to 9, **characterized in that** the thermal contact (26) projects into the fluid line (20) and forms convective heat transfer to the heat transport medium (22).

11. Building module as claimed in any one of claims 1 to 7, **characterized in that** the heat transfer element (12) is releasably connectable to the fluid line (20) in at least one axial end section (24, 28).

12. Building module as claimed in claim 11, **characterized in that** the fluid line (20) has at least one guide strip (82) extending in a longitudinal direction of the fluid line (20), the at least one axial end section (24) of the heat transfer element (12) being introducible into said guide strip (82).

13. Building module as claimed in claim 12, **characterized in that** a plurality of heat transfer elements (12) are mounted in the guide strip (82) and are spaced apart by means of spacer elements (90) which are mounted in the guide strip (82).

14. Building module as claimed in any one of claims 1 to 13, **characterized in that** the outer pane (32) is formed from a transparent material and wherein a surface (46) of the inner pane (30) which faces the intermediate space (36) has an infrared reflection layer (48) in order to reflect the incoming infrared rays into the intermediate space (36).

15. A method for producing a building module (10), in particular a facade module, roof module or window module, comprising the steps of:
- providing a fluid line (20) in which a heat transport medium (22) is able to be conducted,
- providing a heat transfer element (12), in particular an absorber element, which has at least one functional surface (16) for absorbing heat radiation and/or for controlling the temperature of ambient air,
- forming a thermal contact between the heat transfer element (12) and the fluid line (20), wherein the heat transfer element (12) forms a heat conductor between the functional surface (16) and the thermal contact (26), and
- connecting an inner pane (30) and an outer pane (32) to the fluid line such that an intermediate space (36), in which the heat transfer element (12) is arranged, is formed between the inner pane (30) and the outer pane (32),
**characterized in that** the heat transfer element (12) is configured as a solid body, and the functional surface (16) and the fluid line (20) are arranged juxtaposed to one another when the functional surface (16) is viewed in a perpendicular direction.

## Revendications

1. Module de bâtiment (10), en particulier module de façade, module de toit ou module de fenêtre, pour l'utilisation d'énergie solaire et/ou pour l'isolation thermique, avec :
- une vitre intérieure (30) et une vitre extérieure (32), dans lequel un espace intermédiaire (36) est formé entre la vitre intérieure (30) et la vitre extérieure (32),
- un élément de transmission de chaleur (12), en particulier un élément absorbeur (12) qui est agencé dans l'espace intermédiaire (36) et présente au moins une surface fonctionnelle (16) pour l'absorption du rayonnement thermique et/ou pour l'équilibrage de la température de l'espace intermédiaire,
- une conduite de fluide (20) dans laquelle un agent caloporteur (22) est guidé, dans lequel un contact thermique (26) est formé entre l'élément de transmission de chaleur (12) et l'agent caloporteur (22) afin d'échanger de la chaleur entre l'élément de transmission de chaleur (12) et l'agent caloporteur (22),
dans lequel l'élément de transmission de chaleur (12) forme un conducteur thermique pour la liaison thermique entre la surface fonctionnelle (16) et le contact thermique (26),
**caractérisé en ce que** l'élément de transmission de chaleur (12) est réalisé en tant que corps plein, dans lequel la surface fonctionnelle (16) et la conduite de fluide (20) à laquelle est associé le contact thermique (26), sont agencées l'une à côté de l'autre dans le sens d'observation perpendiculaire sur la surface fonctionnelle (16).

2. Module de bâtiment selon la revendication 1 ou le préambule de la revendication 1, **caractérisé en ce que** l'espace intermédiaire (36) est réalisé de manière étanche au gaz et est rempli en un agent gazeux de sorte que de la chaleur puisse être échangée entre l'agent caloporteur (22) et l'agent gazeux.

3. Module de bâtiment selon l'une quelconque des revendications 1 ou 2, **caractérisé en ce que** l'élément de transmission de chaleur (12) est réalisé en tant qu'élément étiré en longueur (12), dans lequel le contact thermique (26) et la surface fonctionnelle (16) sont réalisés en déport l'un de l'autre dans le sens axial de l'élément de transmission de chaleur (12).

4. Module de bâtiment selon l'une quelconque des revendications 1 à 3, **caractérisé en ce que** le contact thermique (26) est formé sur une section d'extrémité (24) de l'élément de transmission de chaleur (12).

5. Module de bâtiment selon l'une quelconque des revendications 1 à 4, **caractérisé en ce que** le contact thermique (26) est formé sur une surface avant de l'élément de transmission de chaleur (12).

6. Module de bâtiment selon la revendication 4 ou 5, **caractérisé en ce que** l'élément de transmission de chaleur (12) présente une section d'extrémité libre (66) sur laquelle au moins une partie de la surface fonctionnelle (16) est formée.

7. Module de bâtiment selon l'une quelconque des revendications 1 à 5, **caractérisé en ce que** l'élément de transmission de chaleur (12) présente sur deux sections d'extrémité (26, 68) opposées respectivement un contact thermique (26, 70) qui sont associées respectivement à une conduite de fluide (20, 72).

8. Module de bâtiment selon l'une quelconque des revendications 1 à 7, **caractérisé en ce que** l'élément de transmission de chaleur (12) est passé au travers de la conduite de fluide (20) et présente sur les deux côtés de la conduite de fluide (20) respectivement une surface fonctionnelle (16).

9. Module de bâtiment selon l'une quelconque des revendications 1 à 7, **caractérisé en ce que** le module de bâtiment (10) présente une pluralité d'éléments de transmission de chaleur (12) étirés en longueur, dans lequel des axes longitudinaux (14) des éléments de transmission de chaleur (12) sont agencés en biais les uns par rapport aux autres et sont raccordés par voie thermique les uns aux autres.

10. Module de bâtiment selon l'une quelconque des revendications 1 à 9, **caractérisé en ce que** le contact thermique (26) pénètre dans la conduite de fluide (20) et forme une transition thermique convective à l'agent caloporteur (22).

11. Module de bâtiment selon l'une quelconque des revendications 1 à 7, **caractérisé en ce que** l'élément de transmission de chaleur (12) peut être raccordé de manière amovible sur au moins une section d'extrémité (24, 28) axiale à la conduite de fluide (20).

12. Module de bâtiment selon la revendication 11, **caractérisé en ce que** la conduite de fluide (20) présente au moins une baguette de guidage (82) s'étendant dans un sens longitudinal de la conduite de fluide (20), dans laquelle l'au moins une section d'extrémité (24) axiale de l'élément de transmission de chaleur (12) peut être introduite.

13. Module de bâtiment selon la revendication 12, **caractérisé en ce qu'**une pluralité d'éléments de transmission de chaleur (12) est logée dans la baguette de guidage (82) et est espacée au moyen d'éléments d'écartement (90) qui sont logés dans la baguette de guidage (82).

14. Module de bâtiment selon l'une quelconque des revendications 1 à 13, **caractérisé en ce que** la vitre extérieure (32) est formée d'un matériau transparent et dans lequel une surface (46) de la vitre intérieure (30) qui est tournée vers l'espace intermédiaire (36), présente une couche de réflexion infrarouge (48) afin de réfléchir des rayons infrarouges émis dans l'espace intermédiaire (36).

15. Procédé de fabrication d'un module de bâtiment (10), en particulier d'un module de façade, module de toit ou module de fenêtre, avec les étapes :
- la mise à disposition d'une conduite de fluide (20) dans laquelle un agent caloporteur (22) peut être guidé,
- la mise à disposition d'un élément de transmission de chaleur (12), en particulier d'un élément absorbeur, qui présente au moins une surface fonctionnelle (16) pour l'absorption du rayonnement thermique et/ou pour l'équilibrage de la température de l'air ambiant,
- la formation d'un contact thermique (26) entre l'élément de transmission de chaleur (12) et la conduite de fluide (20), dans lequel l'élément de transmission de chaleur (12) forme un conducteur thermique entre la surface fonctionnelle (16) et le contact thermique (26), et
- la liaison d'une vitre intérieure (30) et d'une vitre extérieure (32) avec la conduite de fluide de sorte qu'un espace intermédiaire (36) soit formé entre la vitre intérieure (30) et la vitre extérieure (32), dans lequel l'élément de transmission de chaleur (12) est agencé,
**caractérisé en ce que** l'élément de transmission de chaleur (12) est réalisé en tant que corps plein, et la surface fonctionnelle (16) et la conduite de fluide (20) sont agencées dans le sens d'observation perpendiculaire sur la surface fonctionnelle (16) l'une à côté de l'autre.
